(19) Europäisches Patentamt
European Patent Office
Office européen des brevets

(11) EP 0 698 050 B1

(12) **EUROPÄISCHE PATENTSCHRIFT**

(45) Veröffentlichungstag und Bekanntmachung des Hinweises auf die Patenterteilung:
**19.08.1998   Patentblatt 1998/34**

(21) Anmeldenummer: **94916925.4**

(22) Anmeldetag: **03.05.1994**

(51) Int Cl.$^6$: **C08G 65/20**, C08G 65/10, B01J 21/12

(86) Internationale Anmeldenummer:
**PCT/EP94/01403**

(87) Internationale Veröffentlichungsnummer:
**WO 94/26803 (24.11.1994 Gazette 1994/26)**

(54) **VERFAHREN ZUR HERSTELLUNG VON POLYTETRAHYDROFURAN**

METHOD OF PREPARING POLYTETRAHYDROFURAN

PROCEDE DE PREPARATION DU POLYTETRAHYDROFURANE

(84) Benannte Vertragsstaaten:
**BE DE ES FR GB IT NL**

(30) Priorität: **14.05.1993   DE 4316138**

(43) Veröffentlichungstag der Anmeldung:
**28.02.1996   Patentblatt 1996/09**

(73) Patentinhaber: **BASF AKTIENGESELLSCHAFT 67056 Ludwigshafen (DE)**

(72) Erfinder:
• **DOSTALEK, Roman**
  **D-67354 Roemerberg (DE)**
• **FISCHER, Rolf**
  **D-69121 Heidelberg (DE)**
• **MUELLER, Ulrich**
  **D-67434 Neustadt (DE)**
• **BECKER, Rainer**
  **D-67098 Bad Duerkheim (DE)**

(56) Entgegenhaltungen:
EP-A- 0 239 787          EP-A- 0 302 332
NL-A- 8 100 530          US-A- 4 303 782

## Beschreibung

Die vorliegende Erfindung betrifft ein Verfahren zur Herstellung von Polytetrahydrofuran oder Polytetrahydrofuranmonoestern von $C_1$-bis $C_{20}$-Monocarbonsäuren oder Polytetrahydrofuranmonoethern von einwertigen $C_1$- bis $C_{20}$-Alkoholen eines mittleren Molekulargewichts von 250 bis 10 000 Dalton durch die kationische Polymerisation von Tetrahydrofuran in Gegenwart eines Telogens.

Polytetrahydrofuran (PTHF), auch Polyoxybutylenglykol genannt, dient als Zwischenprodukt zur Herstellung von Polyurethan-, Polyester- und Polyamid-Elastomeren, zu deren Herstellung es als Diolkomponente eingesetzt wird. Der Einbau von PTHF in diese Polymere bewirkt, daß diese weich und flexibel werden, weshalb PTHF auch als Weichsegment-Komponente für diese Polymere bezeichnet wird.

PTHF-Monoester von Monocarbonsäuren finden z.B. als Weichmacher (US-A 4 482 411), Imprägniermittel (DE-A 2932216) oder als Monomere (EP-A 286454) Verwendung. PTHF-Monoether von einwertigen Alkoholen dienen zur Herstellung spezieller Polyurethane (JP-A 105029/1988) und spezieller Schmieröle (EP-A 336 171).

Die kationische Polymerisation von Tetrahydrofuran (THF) mit Hilfe von Katalysatoren wurde von Meerwein et al. (Angew. Chem. 72, 927 (1960)) beschrieben. Als Katalysatoren werden dabei entweder vorgeformte Katalysatoren verwendet, oder die Katalysatoren werden in situ im Reaktionsgemisch erzeugt. Dies geschieht dadurch, daß im Reaktionsmedium mit Hilfe starker Lewis-Säuren, wie Bortrichlorid, Aluminiumchlorid, Zinntetrachlorid, Antimonpentachlorid, Eisen(III)chlorid oder Phosphorpentafluorid oder mittels starker Brönstedt-Säuren, wie Perchlorsäure, Tetrafluoroborsäure, Fluorsulfonsäure, Chlorsulfonsäure, Hexachlorozinn(IV)säure, Jodsäure, Hexachloroantimon(V)säure oder Tetrachloroeisen(III)säure und mit Hilfe von als Promotoren bezeichneten reaktiven Verbindungen, wie Alkylenoxiden, z.B. Ethylenoxid, Propylenoxid, Epichlorhydrin oder Butylenoxid, Oxetanen, Orthoestern, Acetalen, $\alpha$-Halogenethern, Benzylhalogeniden, Triarylmethylhalogeniden, Säurechloriden, $\beta$-Lactonen, Carbonsäureanhydriden, Thionylchlorid, Phosphoroxychlorid oder Sulfonsäurehalogeniden, Oxoniumionen erzeugt werden, die die Polymerisation des THF initiieren. Aus der Vielzahl dieser Katalysatorsysteme haben jedoch nur wenige technische Bedeutung erlangt, da sie teilweise hoch korrosiv sind und/oder bei der Herstellung des PTHF zu verfärbten PTHF-Produkten mit nur beschränkter Verwendbarkeit führen. Viele dieser Katalysatorsysteme wirken darüber hinaus nicht im eigentlichen Sinne katalytisch, sondern müssen, bezogen auf das herzustellende Makromolekül, in stöchiometrischen Mengen eingesetzt werden und werden bei der Polymerisation verbraucht. Beispielsweise müssen bei der Herstellung von PTHF mit Fluorsulfonsäure als Katalysator nach US-A 3 358 042 zwei Moleküle Fluorsulfonsäure pro Molekül PTHF als Katalysator eingesetzt werden. Ein besonderer Nachteil der Verwendung halogenhaltiger Katalysatorsysteme ist, daß diese zur Bildung halogenierter Nebenprodukte bei der PTHF-Herstellung führen, die vom reinen PTHF nur sehr schwierig abzutrennen sind und dessen Eigenschaften nachteilig beeinflussen.

Bei der Herstellung von PTHF in Gegenwart der genannten Promotoren werden diese Promotoren als Telogene in das PTHF-Molekül eingebaut, so daß als primäres Produkt der THF-Polymerisation nicht PTHF entsteht, sondern ein PTHF-Derivat, beispielsweise ein PTHF-Diester oder -Sulfonat, aus dem das PTHF in einer weiteren Umsetzung, z.B. durch Verseifung oder Umesterung (vgl. US-A 2 499 725 und DE-A 27 60 272) freigesetzt werden muß. Bei der Verwendung von Alkylenoxiden als Promotoren wirken diese auch als Comonomere und werden in das Polymer eingebaut, mit der Folge, daß THF-Alkylenoxid-Copolymere mit anderen Eigenschaften, insbesondere anderen Anwendungseigenschaften als PTHF, gebildet werden.

In US-A 4 568 775 und US-A 4658065 wird ein Verfahren zur Herstellung von PTHF beschrieben, bei dem Heteropolysäuren als Katalysatoren angewendet werden. Die Heteropolysäuren sind zu einem gewissen Grad in der Polymerisationsmischung und im Polymerisat löslich und müssen, da sie Verfärbungen des PTHF-Produktes verursachen durch aufwendige technische Maßnahmen - Zusatz eines Kohlenwasserstoffs zur Ausfällung der Heteropolysäure, Abtrennung der ausgefällten Heteropolysäure und Abtrennung des zugesetzten Kohlenwasserstoffs - aus diesem entfernt werden. Dadurch wird das Verfahren ebenfalls unwirtschaftlich.

In US-A 5 149 862 wird sulfatdotiertes Zirkoniumdioxid als heterogener, im Reaktionsmedium unlöslicher Polymerisationskatalysator verwendet. Zur Beschleunigung der Polymerisation wird dem Reaktionsmedium ein Gemisch aus Essigsäure und Acetanhydrid zugesetzt, da in Abwesenheit dieser Promotoren, die Polymerisation nur sehr schleppend verläuft und während eines Zeitraums von 19 Stunden nur ein Umsatz von 6 % erzielt wird. Bei diesem Verfahren werden PTHF-Diacetate gebildet, die anschließend durch Verseifung oder Umesterung in PTHF umgewandelt werden müssen.

Ebenfalls PTHF-Diester entstehen bei der Polymerisation von THF mit Bleicherdekatalysatoren nach EP-A 3112.

In US-A 4 303 782 werden Zeolithe zur Herstellung von PTHF eingesetzt. Die nach diesem Verfahren erhältlichen THF-Polymeren haben extrem hohe mittlere Molekulargewichte - $M_n$ 250.000 bis 500.000 D - und konnten sich für die obengenannten Anwendungszwecke nicht durchsetzen. Dementsprechend hat auch dieses Verfahren keine industrielle Bedeutung erlangt. Ein weiterer schwerwiegender Nachteil dieses Verfahrens ist die geringe Raum-Zeit-Ausbeute (ca. 4 % in 24 Stunden), die mit den.darin verwendeten Zeolithen erzielt wird.

Nach US-A 4120903 kann PTHF aus THF und Wasser mit Hilfe von supersapren Nafion®-Ionenaustauscherharzen hergestellt werden. Diese speziellen Ionenaustauscher sind wegen ihrer schwierigen Herstellbarkeit sehr teuer und verteuern dadurch das mit ihrer Hilfe hergestellte PTHF. Ein weiterer Nachteil dieser Ionenaustauscher-Harze ist ihre unzureichende Langzeitstabilität und ihre mangelnde Reaktivierbarkeit, was sich ebenfalls auf die Wirtschaftlichkeit dieses Verfahrens negativ auswirkt.

PTHF-Monocarbonsäureester werden gemäß EP-A 286 454 hergestellt, indem man THF durch eine Lewis- bzw. Brönsted-Säure-katalysierte Ringöffnungspolymerisation polymerisiert und die Polymerisation durch die Zugabe eines Carbonsäurehalogenids und anschließende hydrolytische Aufarbeitung des Reaktionsgemisches oder durch die Zugabe eines Carbonsäuresalzes, unter Bildung des PTHF-Monoesters abbricht. Da bei diesem Verfahren sehr starke und hochkorrosive Lewis- oder Brönsted-Säure-Katalysatoren, wie Antimonpentafluorid, Silbertetrafluoroborat oder Trifluormethansulfonsäure, angewandt werden müssen, welche wiederum die Verwendung besonders korrosionsbeständiger Spezialwerkstoffe erfordern, entsteht bei diesem Verfahren ein hoher apparativer Aufwand.

JP-A 83 028/1983 lehrt die Polymerisation von THF in Gegenwart eines Carbonsäurehalogenids oder Carbonsäureanhydrids, wobei eine Heteropolysäure als Katalysator unter wasserfreien Bedingungen benutzt wird. Dabei entstehen jedoch PTHF-Diester, welche nicht selektiv in die entsprechenden Monoester umgewandelt werden können und aus diesem Grunde vollständig zu PTHF hydrolysiert werden.

EP-A 503 394 betrifft ein Verfahren zur Herstellung von PTHF-Monoestern von Monocarbonsäuren, in dem THF in Gegenwart einer Monocarbonsäure und eines Heteropolysäurekatalysators polymerisiert wird.

Polyetherglykol-Monoether werden nach den Angaben von JP-A 105 029/1988 über die kationische Ringöffnungspolymerisation von cyclischen Ethern, wie Tetrahydrofuran, in Gegenwart von einwertigen Alkoholen mit Hilfe von Lewis-Säure-Katalysatoren hergestellt. Beispiele für solche Katalysatoren sind Bortrifluorid, Antimonpentafluorid und Aluminiumtrichlorid. Zur Initiierung der Polymerisationsreaktion muß zusätzlich noch ein 3- oder 4-gliedriger Ether zugesetzt werden, beispielsweise ein Epoxid oder Oxetan. Nachteilig an diesem Verfahren ist, daß sich die Polymerisation bei diesem Verfahren nicht kontinuierlich durchführen läßt und die Lewis-Säure-Katalysatoren nicht wiederverwendet werden können. Darüber hinaus sind diese Lewis-Säuren hochkorrosiv, so daß die damit in Kontakt kommenden Apparaturen aus besonders korrosionsbeständigen Spezialwerkstoffen gebaut sein müssen, wodurch das Verfahren beträchtlich verteuert wird.

JP-A 159 824 (1984) beschreibt ein Verfahren zur Polymerisation cyclischer Ether mit Hilfe wasserhaltiger Heteropolysäure-Katalysatoren in Gegenwart von Alkoholen. Nach den Angaben dieser Schrift können allerdings nur relativ kurzkettige Polymere erhalten werden. Bei einem nach den Vorgaben dieser Schrift durchgeführten Versuch zur Herstellung von PTHF-Monoisopropylether konnte kein polymeres Produkt isoliert werden.

US-A 46 58 065 betrifft ein Verfahren zur Herstellung von Polyetherpolyolen, wobei Tetrahydrofuran mit mehrwertigen Alkoholen mit Hilfe wasserhaltiger Heteropolysäure-Katalysatoren copolymerisiert wird. Außerdem wird in dieser Patentschrift vorgeschlagen, Polyoxyalkylenglykol-Monoether durch die Umsetzung der betreffenden cyclischen Ether mit einwertigen Alkoholen und mit wasserhaltigen Heteropolysäure-Katalysatoren und/oder wasserhaltigen Reaktanden herzustellen. Unter nach der Lehre dieses Patents angewandten Reaktionsbedingungen erhält man jedoch nur schwer trennbare Gemische aus den betreffenden Polyoxyalkylenglykolen und Polyoxyalkylenglykol-Monoethern. Ein zusätzlicher Nachteil dieses Verfahrens ist die aufwendige Abtrennung des Heteropolysäurekatalysators vom Produkt.

In EP-A 503 393 wird ebenfalls ein Verfahren zur Herstellung von PTHF-Monoethern von Monoalkoholen unter Zuhilfenahme eines Heteropolysäurekatalysators beschrieben.

Der vorliegenden Erfindung lag deshalb die Aufgabe zugrunde, ein wirtschaftliches Verfahren zur Herstellung von PTHF, PTHF-Monoestern von Monocarbonsäuren und PTHF-Monoethern von einwertigen Alkoholen zu finden, das nicht die Nachteile der obengenannten Verfahren hat, und das die Herstellung von PTHF bzw. der genannten PTHF-Derivate direkt durch die Polymerisation von THF in Gegenwart der jeweiligen Telogene - Wasser, Monocarbonsäure bzw. einwertiger Alkohol - ermöglicht. Hierzu geeignete Katalysatoren sollten sich durch eine lange Standzeit auszeichnen und sollten leicht regenerierbar sein.

Dementsprechend wurde ein Verfahren zur Herstellung von Polytetrahydrofuran oder Polytetrahydrofuranmonoestern von $C_1$- bis $C_{20}$-Monocarbonsäuren oder Polytetrahydrofuranmonoethern von einwertigen $C_1$- bis $C_{20}$-Alkoholen eines mittleren Molekulargewichts von 250 bis 10 000 Dalton durch die kationische Polymerisation von Tetrahydrofuran in Gegenwart eines Telogens gefunden, das dadurch gekennzeichnet ist, daß man Tetrahydrofuran in Gegenwart von Wasser, 1,4-Butandiol und/oder Polytetrahydrofuran eines mittleren Molekulargewichts von 200 bis 700 Dalton und/oder einer $C_1$- bis $C_{20}$-Monocarbonsäure und/oder einem einwertigen $C_1$- bis $C_{20}$-Alkohol mit Hilfe einer katalytisch aktiven Menge eines Zeolith-Katalysators polymerisiert, der ein $SiO_2/Al_2O_3$-Molverhältnis von 4:1 bis 100:1 hat und in dem das Populationsverhältnis P der Säurestellen an der äußeren Oberfläche des Zeolithen zur Gesamtzahl der Säurestellen des Zeolithen 0,03/1 oder mehr beträgt, und wobei das eingesetzte Tetrahydrofuran einen Telogengehalt von 0,04 bis 17 mol %, bezogen auf das Tetrahydrofuran hat.

Als Polymerisationskatalysatoren werden im erfindungsgemäßen Verfahren Zeolithe eingesetzt. Als Zeolithe wird eine Klasse von Aluminosilikaten bezeichnet, die aufgrund ihrer besonderen chemischen Struktur, im Kristall dreidimensionale Netzwerke mit definierten Poren und Kanälen ausbilden. Je nach Art ihrer Zusammensetzung, insbeson-

dere des $SiO_2$-$Al_2O_3$-Molverhältnisses und ihrer Kristallstruktur, die außer durch das genannte Atomverhältnis durch die Art und Weise der Herstellung der Zeolithe bestimmt wird, unterscheidet man verschiedenerlei Zeolith-Typen, deren Namen teilweise auf natürlich vorkommende Zeolith-Mineralien analoger Zusammensetzung und Struktur zurückgeführt werden, beispielsweise die Faujasite, Mordenite oder Clinoptilolithe, oder die, falls konkrete Analoga für die künstlich hergestellten Zeolithe in der Natur fehlen oder diese Zeolithe eine strukturelle Unterklasse der natürlich vorkommenden Zeolithe bilden, mit Akronymen bezeichnet werden, beispielsweise die zum Faujasit-Typ gehörenden Y- und X-Zeolithe oder die Zeolithe mit Pentasilstruktur, wie ZSM-5, ZSM-11 oder ZBM-10. Zusammenfassungen über die chemische Zusammensetzung der Zeolithe, ihre räumliche und chemische Struktur und über die Art und Weise ihrer Herstellung finden sich z.B. in D. W. Breck, "Zeolite Molecular Sieves", Wiley, New York, 1974.

Ein kritisches Merkmal des erfindungsgemäßen Verfahrens ist die Wahl von Zeolithen, die bei einem $SiO_2$/$Al_2O_3$-Molverhältnis von 4:1 bis 100:1, insbesondere 10:1 bei 100:1, vorzugsweise von 15:1 bis 90:1 und besonders bevorzugt von 20:1 bis 80:1, ein Populationsverhältnis P der Säurestellen an der äußeren Oberfläche des Zeolithen zur Gesamtzahl der Säurestellen des Zeolithen von 0,03/1 oder mehr, vorzugsweise von 0,03/1 bis 0,35/1, und besonders bevorzugt von 0,03/1 bis 0,1/1 haben. Die Primärkristalle dieser Zeolithe haben eine Teilchengröße von bis zu 0,5 µm, vorzugsweise von bis zu 0,1 µm und besonders bevorzugt von bis zu 0,05 µm.

Das Populationsverhältnis P der Säurestellen an der äußeren Oberfläche des Zeolithen zur Gesamtzahl der Säurestellen des Zeolithen ist selbst bei gleichartigen Zeolithen, die das gleiche $SiO_2$/$Al_2O_3$-Molverhältnis haben, in Abhängigkeit von der Teilchengröße der Primärkristalle der Zeolithe sehr unterschiedlich, selbst wenn die Population der Gesamtzahl der Säurestellen im Zeolithen gleich groß ist. Zeolithe von kleinerer Teilchengröße der Primärkristalle haben eine größere Anzahl von Säurestellen an der äußeren Oberfläche pro Gewichtseinheit als Zeolithe mit größeren Teilchengrößen der Primärkristalle. Dieser Unterschied wird mit herkömmlichen Adsorptionsmethoden zur Bestimmung der äußeren und inneren Oberfläche des Zeolithen, beispielsweise solchen, wie sie in US-A 4 303 782 genannt sind, nicht erfaßt.

Es wurde nun gefunden, daß Zeolithe, deren Populationsverhältnis P und deren $SiO_2$/$Al_2O_3$-Molverhältnis die obengenannten Werte haben, die Polymerisation von THF zu PTHF oder PTHF-Monoestern oder -Monoethern mit einem mittleren Molekulargewicht von 250 bis 10 000 Dalton besonders effizient, d.h. mit einem hohem Umsatz, katalysieren und PTHF bzw. die betreffenden PTHF-Derivate in hohen Ausbeuten ergeben. Es konnte noch keine befriedigende Erklärung für diesen Sachverhalt gefunden werden. Möglicherweise besitzen diese feinteiligen Zeolithe eine im Vergleich zu Zeolithen mit größeren Teilchengrößen unterschiedliche Mikrostruktur der Oberfläche.

Das Populationsverhältnis P der Säurestellen an der äußeren Oberfläche des Zeolithen zur Gesamtzahl der Säurestellen des Zeolithen kann aus der Menge an adsorbiertem Amin an der Oberfläche des Zeolithen und der Gesamtmenge von am Zeolithen adsorbiertem Amin ermittelt werden. Die Bestimmung der Säurestellen auf der äußeren Oberfläche des Zeolithen wird vorzugsweise mit Tributylamin durchgeführt, wohingegen zur Bestimmung der Gesamtzahl der Säurestellen des Zeolithen vorzugsweise Pyridin verwendet wird. Im übrigen kann die Bestimmung des Populationsverhältnisses P nach der Methode durchgeführt werden, wie sie in US-A 4 588 846 angegeben ist. In US-A 4 588 846 wird der Einfluß feinverteilter Zeolithe auf die Umsetzung von zyklischen Olefinen in Wasser beschrieben. Das Verfahren zur Umsetzung zyklischer Olefine mit Wasser ist aber von der Polymerisation von THF zu PTHF von Grund auf verschieden.

Im erfindungsgemäßen Verfahren können alle Zeolithe eingesetzt werden, welche die zuvor genannten Voraussetzungen erfüllen. Als Beispiele hierfür seien die Zeolithe aus der Mordenit-Gruppe, Zeolithe der Faujasit-Gruppe, insbesondere die künstlich hergestellten X- und Y-Zeolithe, insbesondere stabilisierte Zeolithe des USY-Typs genannt. Von den Y- und USY-Zeolithen sind insbesondere solche bevorzugt, die ein $SiO_2$/$Al_2O_3$-Molverhältnis von 4:1 bis 70:1, vorzugsweise von 10:1 bis 50:1 haben. Ebenso können auch Alumo- oder Silicoalumophosphate mit Zeolithstruktur verwendet werden.

Besonders bevorzugt werden im erfindungsgemäßen Verfahren Zeolithe mit Pentasilstruktur verwendet, beispielsweise ZSM-5-, ZSM-11- und ZBM-10-Zeolithe. Von diesen Zeolithen aus der Pentasilgruppe haben wiederum solche besonders vorteilhafte Eigenschaften im erfindungsgemäßen Verfahren, welche so hergestellt wurden, daß sie weitgehend frei von Alkalimetallverbindungen sind, d.h. deren Alkalimetallgehalt im allgemeinen weniger als 50 Gew.-ppm beträgt. Die Herstellung alkalifreier ZBM-10-Zeolithe ist in EP-A 7081 beschrieben, eine Methode zur Herstellung weitgehend alkalifreier ZSM-5-Zeolithe wird von Müller et al in Occelli, Robson (Eds.) "Zeolite Synthesis", A.C.S. Symp. Series 398, 346 (1989) angegeben. Die obengenannten Y- und USY-Zeolithe können nach dem Verfahren von J. Scherzer, Chemical Industries, Bd. 42 - Octane enhancing zeolitic FCC catalysts, S. 22-38, Marcel Dekker Inc., 1990, hergestellt werden. Die nach diesen Methoden hergestellten Zeolithe liegen nach einer Temperaturbehandlung bei z. B. 500 bis 600°C in der H-Form vor.

Die Zeolithe mit den genannten Teilchengrößen der Primärkristalle können als solche z.B. in diskontinuierlichen Verfahren zur Herstellung von PTHF bzw. den genannten PTHF-Derivaten verwendet werden. Für kontinuierliche Verfahren zur Herstellung von PTHF oder PTHF-Derivaten, insbesondere bei Verwendung einer Festbett-Anordnung des Katalysators im Reaktor, werden die feinteiligen Zeolithe vorteilhaft zu Formkörpern verformt eingesetzt, beispielsweise in Form von Kugeln oder Zylindern.

Die Zeolithe werden im erfindungsgemäßen Verfahren in der sogenannten H-Form eingesetzt. Diese ist dadurch gekennzeichnet, daß im Zeolith acide OH-Gruppen vorliegen. Falls die Zeolithe nicht schon bei ihrer Herstellung in der H-Form anfallen, können sie leicht z.B. durch eine Säurebehandlung mit z.B. Mineralsäuren, wie Salzsäure, Schwefelsäure, Phosphorsäure oder durch thermische Behandlung eines geeigneten Vorläufer-Zeolithen, der z.B. Ammonium oder Ammoniumverbindungen als Kationen enthält, beispielsweise durch Erhitzen auf Temperaturen von 450 bis 600°C, vorzugsweise von 500 bis 550°C, in die katalytisch aktive H-Form umgewandelt werden.

Infolge ihrer Herstellung durch Hydrothermalsynthese enthalten die Zeolithe eine größere Menge an Kristallwasser sowie an in den Hohlraumstrukturen adsorbiertem Wasser, die je nach Zeolith-Typ und Herstellungsweise variieren kann. Das im Zeolith enthaltene Wasser kann durch Erhitzen des Zeolithen auf höhere Temperaturen praktisch vollständig aus diesem ausgetrieben werden. Im erfindungsgemäßen Verfahren können Zeolithe verwendet werden, die über ihren herstellungsbedingten Kristallwassergehalt verfügen, besonders bevorzugt werden im erfindungsgemäßen Verfahren aber Zeolithe verwendet, deren Kristallwassergehalt durch eine Hitzebehandlung auf Werte von weniger als 2 Gew.-%, besonders vorteilhaft von weniger als 1 Gew.-%, abgesenkt wurde.

Die Entwässerung des Zeolithen wird zweckmäßigerweise so vorgenommen, daß man den Zeolithen bei Temperaturen von 100 bis 550°C, vorzugsweise von 140 bis 500°C und besonders bevorzugt von 170 bis 450°C solange erhitzt, bis er den gewünschten Wassergehalt hat. Die hierzu benötigte Temperatur und Zeit kann herabgesetzt werden, indem man die Hitzebehandlung bei vermindertem Druck, im allgemeinen bei einem Druck von 0,1 bis 500 mbar, vorzugsweise von 1 bis 300 mbar und besonders bevorzugt bei 3 bis 100 mbar, durchführt. Der Wassergehalt des Zeolithen kann dabei z.B. gravimetrisch bestimmt werden, indem man Aliquote der so behandelten Zeolithproben mit einer bis zur Gewichtskonstanz getrockneten Zeolithprobe vergleicht, indem man das Gewicht der ausgetriebenen Wassermenge mißt oder indem man diese durch Karl-Fischer-Titration des desorbierten Wassers ermittelt.

Die unbehandelten als auch die entwässerten Zeolithe werden bei der Polymerisation, bezogen auf das eingesetzte THF, im allgemeinen in einer Menge von 1 bis 90 Gew.-%, vorzugsweise von 4 bis 70 Gew.-% und besonders bevorzugt von 8 bis 60 Gew.-% zugesetzt.

Als Telogene, d.h. als Substanzen, die den Kettenabbruch bei der Polymerisation verursachen, eignen sich bei der Herstellung von PTHF Wasser und/oder 1,4-Butandiol. Gewünschtenfalls kann niedermolekulares, offenkettiges PTHF eines mittleren Molekulargewichts von 200 bis 700 Dalton in die Polymerisationsreaktion zurückgeführt werden, wo es in größere PTHF-Moleküle umgewandelt wird. 1,4-Butandiol und niedermolekulares, offenkettiges PTHF werden nicht nur als Telogen sondern auch als Comonomer in die PTHF-Kette eingebaut. Zur Herstellung von PTHF-Monoestern von Monocarbonsäuren werden im allgemeinen $C_1$- bis $C_{20}$-Monocarbonsäuren als Telogene gewählt, vorzugsweise werden $C_1$- bis $C_{20}$-Monocarbonsäuren, insbesondere $C_1$- bis $C_4$-Monocarbonsäuren und besonders bevorzugt Ameisensäure eingesetzt. Es können sowohl aliphatische als auch aromatische Monocarbonsäuren verwendet werden, je nachdem zu welchem Zweck der PTHF-Monocarbonsäureester verwendet werden soll. Bei der Herstellung von PTHF-Monoethern einwertiger Alkohole setzt man als Telogen im allgemeinen einwertige $C_1$- bis $C_{20}$-Alkohole und besonders bevorzugt einwertige $C_1$- bis $C_4$-Alkohole, insbesondere tert.-Butanol sowie Benzylalkohol, ein. Es können sowohl aliphatische als auch aromatische, einwertige Alkohole verwendet werden, je nachdem zu welchem Zweck der PTHF-Monoether eines einwertigen Alkohols verwendet werden soll. Bei der Herstellung der PTHF-Monoester von Monocarbonsäuren als auch bei der Herstellung der PTHF-Monoether von einwertigen Alkoholen kann 1,4-Butandiol und/oder niedermolekulares PTHF in die PTHF-Kette einpolymerisiert werden.

Anstelle von 1,4-Butandiol und/oder offenkettigem, niedermolekularem PTHF können als Telogen und Comonomer auch andere zweiwertige Alkohole verwendet werden, beispielsweise zweiwertige aliphatische $C_2$- bis $C_{20}$-Alkohole, wie Ethylenglykol oder 1,3-Propandiol, wobei diese zweiwertigen Alkohole analog dem 1,4-Butandiol in die PTHF-Kette eingebaut werden. Die Verwendung von 1,4-Butandiol oder niedermolekularem PTHF als Telogen ist gegenüber der Verwendung anderer Diole als Telogen bevorzugt, da 1,4-Butandiol und niedermolekulares PTHF die gleiche Struktureinheit ins PTHF einbringen wie THF, nämlich die Oxybutylengruppe, wohingegen die Verwendung anderer Diole zu PTHF-Derivaten führt. Verfahrenstechnisch ist die Verwendung anderer Diole der Verwendung von 1,4-Butandiol oder niedermolekularem PTHF aber äquivalent.

Das Telogen wird zweckmäßigerweise gelöst im THF der Polymerisation zugeführt. Da das Telogen den Abbruch der Polymerisation bewirkt, läßt sich über die eingesetzte Telogenmenge das mittlere Molekulargewicht des PTHF's bzw. der PTHF-Monoester oder Monoether steuern. Je mehr Telogen im Reaktionsgemisch enthalten ist, desto niedriger wird das mittlere Molekulargewicht des PTHF oder des betreffenden PTHF-Derivates. Je nach Telogengehalt der Polymerisationsmischung können PTHF bzw. die betreffenden PTHF-Derivate mit mittleren Molekulargewichten von 250 bis 10000 gezielt hergestellt werden. Vorzugsweise werden mit dem erfindungsgemäßen Verfahren PTHF bzw. die betreffenden PTHF-Derivate mit mittleren Molekulargewichten von 500 bis 10 000 Dalton, besonders bevorzugt von 1000 bis 3000 Dalton hergestellt. Hierzu wird das Telogen, bezogen auf die eingesetzte THF-Menge in Mengen von 0,04 bis 17 mol-%, vorzugsweise von 0,2 bis 8 mol-% und besonders bevorzugt von 0,4 bis 4 mol-% zugesetzt.

Die Polymerisation wird im allgemeinen bei Temperaturen von 0 bis 80°C, vorzugsweise von 25°C bis zur Siedetemperatur des THF durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird.

Zur Vermeidung der Bildung von Etherperoxiden wird die Polymerisation vorteilhaft unter einer Inertgasatmosphäre vollzogen. Als Inertgase können z.B. Stickstoff, Wasserstoff, Kohlendioxid oder die Edelgase dienen, bevorzugt wird Stickstoff verwendet.

Das erfindungsgemäße Verfahren kann diskontinuierlich oder kontinuierlich betrieben werden, wobei aus wirtschaftlichen Gründen die kontinuierliche Betriebsweise bevorzugt wird.

Bei der diskontinuierlichen Betriebsweise werden die Reaktanden THF, das betreffende Telogen und der Zeolith-Katalysator im allgemeinen in einem Rührkessel bei den angegebenen Temperaturen solange umgesetzt, bis der gewünschte Umsetzungsgrad des THF's erreicht wird. Die Reaktionszeit kann 0,5 bis 40 Stunden, vorzugsweise 1 bis 30 Stunden betragen.

Bei der kontinuierlichen Betriebsweise wird der Zeolith-Katalysator zweckmäßigerweise in einem Festbett angeordnet und das THF gemeinsam mit dem betreffenden Telogen in Sumpf- oder Rieselfahrweise durch das Katalysatorbett geleitet. Dabei werden im allgemeinen THF-Zulaufraten von 0,04 bis 1 g THF/ml Kat.$\cdot$h$^{-1}$, vorzugsweise von 0,07 bis 0,3 g THF/ml Kat.$\cdot$h$^{-1}$ und besonders bevorzugt von 0,09 bis 0,25 g THF/ml Kat.$\cdot$h$^{-1}$ eingestellt (Kat.: Katalysator).

Zur Aufarbeitung wird der Reaktionsaustrag im Falle der diskontinuierlichen Betriebsweise vom darin suspendierten Zeolith-Katalysator zweckmäßigerweise durch Filtration, Dekantieren oder Zentrifugation abgetrennt.

Der vom Katalysator befreite Polymerisationsaustrag wird im allgemeinen destillativ aufgearbeitet, wobei in einer ersten Stufe nicht umgesetztes THF abdestilliert wird. In einer zweiten Reinigungsstufe kann dann gewünschtenfalls niedermolekulares PTHF vom Polymerisat durch Destillation bei vermindertem Druck abgetrennt und in die Umsetzung zurückgeführt werden. Alternativ hierzu können flüchtige THF-Oligomere, beispielsweise nach dem Verfahren von DE-A 30 42 960, depolymerisiert und auf diese Weise wieder in die Umsetzung zurückgeführt werden. Die Depolymerisation ist besonders dann vorteilhaft, wenn die flüchtigen PTHF-Oligomeren einen größeren Anteil an cyclischen THF-Oligomeren haben.

Läßt der Zeolith-Katalysator nach längerem Betrieb in seiner Aktivität nach, kann er durch Erhitzen in Gegenwart sauerstoffhaltiger Gase, insbesondere Luft, bei Temperaturen von 300 bis 600°C, vorzugsweise bei 450 bis 500°C, regeneriert werden. Die anfängliche Aktivität des Zeolith-Katalysators kann durch diese Behandlung wiederhergestellt werden. Alternativ hierzu kann der desaktivierte Zeolith-Katalysator durch eine 1 bis 5 stündige Behandlung mit wäßrigem Wasserstoffperoxid einer Konzentration von im allgemeinen 0,5 bis 50 Gew.-%, vorzugsweise von 2 bis 40 Gew.-% und besonders bevorzugt von 5 bis 30 Gew.-% bei Temperaturen von im allgemeinen 60 bis 100°C reaktiviert werden. Nach dieser Reaktivierung wird der Katalysator bei den oben angegebenen Bedingungen von anhaftendem Wasser befreit.

Beispiele

Das mittlere Molekulargewicht ($M_n$) des hergestellten PTHF wurde durch die Bestimmung der OH-Zahl ermittelt. Die OH-Zahl wurde bestimmt durch die Veresterung der Hydroxylgruppen mit einem Überschuß einer Essigsäureanhydrid-Pyridin-Mischung. Nach der Umsetzung wurde überschüssiges Essigsäureanhydrid mit Wasser zur Essigsäure hydrolysiert und die so freigesetzte Essigsäure mit Natronlauge zurücktitriert. In gleicher Weise wurde mit einer Blindprobe verfahren, die kein PTHF enthielt.

Die OH-Zahl der Probe ist die Menge an Kaliumhydroxid in mg, die der bei der Veresterung von 1 g Substanz gebundenen Essigsäure äquivalent ist. Aus der so bestimmten OH-Zahl wurde $M_n$ nach der folgenden Formel berechnet:

$$M_n = \frac{56\cdot100\cdot2}{\text{OH-Zahl}} \text{ [g/mol]}$$

Beispiel 1

In einem 100 ml Rührreaktor aus Glas wurden 2,88 g Pulver eines ZSM-5 Zeolithen in der H-Form, der ein $SiO_2$/$Al_2O_3$-Molverhältnis von 44 hatte, dessen Populationsverhältnis P 0,03 betrug und dessen Primärkristallite eine Größe von ca. 0,25 µm hatten (hergestellt nach dem Verfahren von Müller et al in Occelli, Robson (Eds.), A.C.S. Symp. Series 398, 346 (1989)) und 9,33 g THF eines Wassergehalts von 0,1 Gew.-% gefüllt. Das Gemisch wurde unter Rühren 6 Stunden auf 60°C erhitzt, wobei die Viskosität der Reaktionsmischung zunahm. Zur Beendigung der Polymerisation wurden 50 ml einer Mischung aus je 50 Volumenteilen Wasser und Toluol in den Reaktor gegeben, wobei sich zwei Phasen bildeten. Aus der Toluol-Phase erhielt man nach destillativer Abtrennung von nicht umgesetztem THF und Toluol 2,37 g PTHF, entsprechend einer Ausbeute von 25 % der Theorie. Das mittlere Molekulargewicht $M_n$ betrug 9000 D.

Beispiel 2

Ein 160 ml Rohrreaktor wurde mit 100 ml eines zu 1 mm-Strängen verformten ZBM-10 Zeolithen in der H-Form, dessen $SiO_2/Al_2O_3$-Molverhältnis 46 betrug und dessen Populationsverhältnis P den Wert 0,07 hatte, mit einer Größe der Primärkristallite von 0,05 bis 0,1 μm und der nach dem Verfahren von EP-A 7081 hergestellt worden war, unter Schutzgas befüllt. Der Wassergehalt des Zeolithen war vorher auf 0,55 Gew.-% eingestellt worden. Über dieses Festbett wurde bei 65°C THF, dem unterschiedliche Wassermengen beigemischt worden waren, kontinuierlich von unten nach oben gefahren. Soweit in Tabelle 1 nicht anders angegeben betrug die Verweilzeit des THF 5 Stunden bezogen auf das Volumen der Katalysatorschüttung. Nicht umgesetztes THF wurde vom farblosen , polymerhaltigen Reaktoraustrag destillativ abgetrennt. Die Ergebnisse dieser Versuche bei unterschiedlichen THF-Zulaufraten sind in Tabelle 1 zusammengestellt.

Tabelle 1

| Betriebszeit (h) | $H_2O$-Gehalt im THF (Gew.-%) | Zulaufrate THF (ml/h) | THF-Umsatz (%) | $M_n$ |
|---|---|---|---|---|
| 67 | 0,1 | 20 | 11 | 3800 |
| 162 | 0,2 | 20 | 7,5 | 2200 |
| 210[1] | 0,2 | 17 | 8 | 2400 |
| 254[2] | 0,2 | 10 | 10 | 2700 |

[1] Verweilzeit 6 h

[2] Verweilzeit 10 h

Beispiel 3

Das Beispiel soll die Abhängigkeit des THF-Umsatzes vom Si/Al-Verhältniss (molar) im verwendeten Zeolith-Katalysator verdeutlichen.

Die Polymerisation wurde analog zu Beispiel 1 mit jeweils 30 Gew.-% Zeolith in THF (Wassergehalt 0,2 Gew.-%) durchgeführt. Tabelle 2 faßt die Ergebnisse zusammen.

Tabelle 2

| Zeolith | Si/Al-Molverhältnis | THF-Umsatz (%) |
|---|---|---|
| ZSM-5 | 22 | 14 |
| ZSM-5 | 680 | 0 |
| ZSM-11 | 32 | 10 |
| Silikalit | 1000 | 0 |

Beispiel 4

In einem 100 ml Glasrührreaktor wurden 2,42 g ZBM-10-Pulver (Zusammensetzung und Herstellung s. Beispiel 2) und 11,2 g THF eines 1,4-Butandiolgehaltes von 1,0 Gew.-% 5 Stunden bei 65°C gerührt. Die Aufarbeitung der Polymerisationsmischung wurde wie in Beispiel 1 durchgeführt.

Ausbeute PTHF: 1 g $\triangleq$ 9 %

$M_n$: 2500 Dalton

**Patentansprüche**

1. Verfahren zur Herstellung von Polytetrahydrofuran oder Polytetrahydrofuranmonoestern von $C_1$- bis $C_{20}$-Monocarbonsäuren oder Polytetrahydrofuranmonoethern von einwertigen $C_1$- bis $C_{20}$-Alkoholen eines mittleren Molekulargewichts von 250 bis 10 000 Dalton durch die kationische Polymerisation von Tetrahydrofuran in Gegenwart eines Telogens, dadurch gekennzeichnet, daß man Tetrahydrofuran in Gegenwart von Wasser, 1,4-Butandiol und/oder Polytetrahydrofuran eines mittleren Molekulargewichts von 200 bis 700 Dalton und/oder einer $C_1$-bis $C_{20}$-Monocarbonsäure und/oder einem einwertigen $C_1$- bis $C_{20}$-Alkohol mit Hilfe einer katalytisch aktiven Menge eines Zeolith-Katalysators polymerisiert, der ein $SiO_2/Al_2O_3$-Molverhältnis von 4:1 bis 100:1 hat und in dem das Populationsverhältnis P der Säurestellen an der äußeren Oberfläche des Zeolithen zur Gesamtzahl der Säurestellen des Zeolithen 0,03/1 oder mehr beträgt und wobei das eingesetzte Tetrahydrofuran einen Telogengehalt von 0,04 bis 17 mol %, bezogen auf das Tetrahydrofuran, hat.

2. Verfahren nach Anspruch 1, dadurch gekennzeichnet, daß man als Zeolith-Katalysator ZSM-5-Zeolithe, ZSM-11-Zeolithe oder ZBM-10-Zeolithe verwendet.

3. Verfahren nach den Ansprüchen 1 und 2, dadurch gekennzeichnet, daß man Zeolithe mit einem Wassergehalt von weniger als 2 Gew.-% verwendet.

4. Verfahren nach den Ansprüchen 1 bis 3, dadurch gekennzeichnet, daß man Zeolith-Katalysatoren mit einem Wassergehalt von weniger als 1 Gew.-% verwendet.

5. Verfahren nach den Ansprüchen 1 bis 4, dadurch gekennzeichnet, daß man Tetrahydrofuran mit einem Wassergehalt von 0,04 bis 17 mol-%, bezogen auf das Tetrahydrofuran, einsetzt.

6. Verfahren nach einem der Ansprüche 1 bis 5, dadurch gekennzeichnet, daß man Zeolith-Katalysatoren verwendet, deren Populationsverhältnis P 0,03 bis 0,35 beträgt.

7. Verfahren nach einem der Ansprüche 1 bis 6, dadurch gekennzeichnet, daß man Zeolithkatalysatoren verwendet, deren Populationsverhältnis P 0,03 bis 0,1 beträgt.

8. Verfahren nach einem der Ansprüche 1 bis 7, dadurch gekennzeichnet, daß man Zeolith-Katalysatoren verwendet, deren Alkaligehalt weniger als 50 Gew.ppm beträgt.

## Claims

1. A process for the preparation of polytetrahydrofuran or polytetrahydrofuran monoesters of $C_1$-$C_{20}$-monocarboxylic acids or polytetrahydrofuran monoethers of monohydric $C_1$-$C_{20}$-alcohols, having an average molecular weight of from 250 to 10,000 Dalton, by cationic polymerization of tetrahydrofuran in the presence of a telogen, wherein tetrahydrofuran is polymerized in the presence of water, 1,4-butanediol and/or polytetrahydrofuran having an average molecular weight of from 200 to 700 Dalton and/or of a $C_1$-$C_{20}$-monocarboxylic acid and/or of a monohydric $C_1$-$C_{20}$-alcohol with the aid of a catalytic amount of a zeolite catalyst which has an $SiO_2/Al_2O_3$ molar ratio of from 4 : 1 to 100 : 1 and in which the population ratio P of the acid centers on the external surface of the zeolite to the total number of acid centers of the zeolite is 0.03/1 or more, the tetrahydrofuran used having a telogen content of from 0.04 to 17 mol %, based on the tetrahydrofuran.

2. A process as claimed in claim 1, wherein the zeolite catalyst used is a ZSM-5 zeolite, a ZSM-11 zeolite or a ZBM-10 zeolite.

3. A process as claimed in claims 1 and 2, wherein a zeolite having a water content of less than 2% by weight is used.

4. A process as claimed in any of claims 1 to 3, wherein a zeolite catalyst having a water content of less than 1% by weight is used.

5. A process as claimed in any of claims 1 to 4, wherein tetrahydrofuran having a water content of from 0.04 to 17 mol %, based on the tetrahydrofuran, is used.

6. A process as claimed in any of claims 1 to 5, wherein a zeolite catalyst whose population ratio P is from 0.03 to 0.35 is used.

7. A process as claimed in any of claims 1 to 6, wherein a zeolite catalyst whose population ratio P is from 0.03 to 0.1 is used.

8. A process as claimed in any of claims 1 to 7, wherein a zeolite catalyst whose alkali metal content is less than 50 ppm by weight is used.

**Revendications**

1. Procédé de préparation de polytétrahydrofuranne ou de polytétrahydrofurannemonoesters d'acides monocarboxyliques en $C_1$-$C_{20}$ ou de polytétrahydrofurannemonoéthers d'alcools monofonctionnels en $C_1$-$C_{20}$ ayant une masse moléculaire moyenne de 250-10000 Dalton, par polymérisation cationique de tétrahydrofuranne en présence d'un télogène, caractérisé en ce que l'on polymérise du tétrahydrofuranne en présence d'eau, de 1,4-bulanediol et/ou de poly(tétrahydrofuranne) ayant une masse moléculaire moyenne de 200-700 Dalton et/ou d'un acide monocarboxylique en $C_1$-$C_{20}$ et/ou d'un alcool monofonctionnel en $C_1$-$C_{20}$, à l'aide d'une quantité catalytiquement active d'un catalyseur-zéolithe, ayant un rapport molaire $SiO_2$/$Al_2O_3$ de 4:1 à 100:1 et pour lequel le rapport de la population P des sites acides à la surface extérieure du zéolithe au nombre total de sites acides du zéolithe s'élève à 0,03/1 ou plus, et pour lequel le tétrahydrofuranne introduit a une teneur en télogène de 0,04-17% en mole, par rapport au tétrahydrofuranne.

2. Procédé selon la revendication 1, caractérisé en ce que l'on utilise comme catalyseur-zéolithe, les zéolithes ZSM-5, les zéolithes ZSM-11 ou les zéolithes ZBM-10.

3. Procédé selon les revendications 1 et 2, caractérisé en ce que l'on utilise des zéolithes ayant une teneur en eau de moins de 2% en poids.

4. Procédé selon l'une quelconque des revendications 1 à 3, caractérisé en ce que l'on utilise des catalyseurs-zéolithes ayant une teneur en eau de moins de 1% en poids.

5. Procédé selon l'une quelconque des revendications 1 à 4, caractérisé en ce que l'on utilise du tétrahydrofuranne ayant une teneur en eau de 0,04-17% en mole, par rapport au tétrahydrofuranne.

6. Procédé selon l'une quelconque des revendications 1 à 5, caractérisé en ce que l'on utilise des catalyseurs-zéolithes dont le rapport de population P vaut 0,03-0,35.

7. Procédé selon l'une quelconque des revendications 1 à 6, caractérisé en ce que l'on utilise des catalyseurs-zéolithes dont le rapport de population P vaut 0,03-0,1.

8. Procédé selon l'une quelconque des revendications 1 à 7, caractérisé en ce que l'on utilise des catalyseurs-zéolithes dont la teneur en alcalis est inférieure à 50 ppm en poids.